# EUROPEAN PATENT SPECIFICATION

(11) **EP 2 552 218 B1**
(45) Date of publication and mention of the grant of the patent: **25.12.2013**
(21) Application number: 11717323.7
(22) Date of filing: 15.03.2011
(51) Int. Cl.: A01N 63/00, A01P 5/00

(54) **BACTERIAL STRAINS AND A BIONEMATICIDE AND PLANT GROWTH STIMULATOR CONTAINING THEM**
BAKTERIENSTÄMME UND BIONEMATIZID SOWIE PFLANZENWACHSTUMSFÖRDERER, DIE DIESE ENTHALTEN
SOUCHES BACTERIENNES ET BIONEMATOCIDE ET STIMULATEUR DE LA CROISSANCE DES PLANTES LES CONTENANT

(30) Priority: 31.03.2010 ES 201000425
(43) Date of publication of application: 06.02.2013
(73) Proprietor: Probelte, SA, 30100 Espinardo (Murcia) (ES)
(72) Inventor: FERNÁNDEZ MARTÍNEZ, Ana Isabel, 30007 Murcia (ES); VILLAVERDE FERNÁNDEZ, Mario Jorge, 30007 Murcia (ES); CASANOVA ROCA, Juan Antonio, 30149 Santomera (Murcia) (ES); NICOLÁS MARTÍNEZ, José Antonio, 30100 Murcia (ES); MALO LÓPEZ-ROMAN, Jorge, 30003 Murcia (ES); BALLESTA GERMÁN, Ceferino, 30850 Totona (Murcia) (ES)
(74) Representative: Juncosa Miro, Jaime
(86) International application number: PCT/IB2011/000549
(87) International publication number: WO 2011/121408

(56) References cited:
- EP-A2- 0 462 721

## Description

### Object of the Invention

The object of the present invention is a liquid or solid biological preparation which has strong nematicidal activity and further has rooting and plant growth stimulating and biofertilizing capacity in seedbeds, nurseries, greenhouses and plant production generally. The new isolates of the microorganism components of the preparation, *Bacillus thuringiensis* strain N₁₁, *Bacillus subtilis* strain SR₁₁ and *Azospirillum brasilense* strain ALo₁, as well as the method for producing the formulations are also objects of this invention.

### Current State of the Art

The need and importance of developing and expanding the methods for integrated production and ecological agriculture as an alternative to the indiscriminate use of chemical products in agriculture for reducing the harmful effects of the latter was acknowledged years ago. The use of microbial biopreparations for the biological control of pests and diseases and for the fertilization of crops of commercial interest presents itself as one of the most promising the alternatives in this context. Furthermore, these biopreparations have an important role in sustainable agriculture models due to the possibility of producing from renewable resources (Altieri, 1997).

Parasitic nematodes of plants attack the roots or the aerial part of most crops, such that it is virtually impossible to maintain economically viable agriculture without some type of control over these organisms. Many of them develop their life cycle in the area of the roots, and they feed off them, generally being associated with plants. Some are endoparasites, i.e., they live and feed inside roots, tubers, shoots, seeds etc. Other are ectoparasites and feed off the plant walls. A few species are highly specific to the host, as in the case of *Heterodera glycinis* in soybean and *Globodera rostochiensis* in potatoes, but they generally have a wide range of hosts (Guerena, 2006).

Endoparasitic nematodes which feed off the roots, being economically important pests, include nodule forming nematodes (*Meloidogyne* species), cyst forming nematodes (*Heterodera* species), and root lesion-forming nematodes (*Pratylenchus* species). However the most economically important ectoparasites which feed off roots include species of the *Paratrichodorus, Trichodorus, Xiphinema, Longidorus, Paralongidorus, Criconemella, Tylenchorhynchus, Merlinius, Pratylenchus, Helicotylenchus, Rotylenchus* and *Scutellonema* genera, among others (Guerena, 2006).

The control of plant pathogenic nematodes is generally a preventive activity. For this reason, the best way to approach this problem is by means of combining different strategies that are complementary to one another. Bridge (1996) proposes four strategies for handling plant pathogenic nematodes based on the indirect use of agrochemicals, physical and cultivation methods, the use of biological control and maintenance of the biodiversity of multiple crops and cultivars which increase the resistance or tolerance to nematodes. This same author acknowledges that despite all the studies related to this topic, there are still much needed answers in practice for the control of nematodes in sustainable agricultural systems.

Plant pathogenic nematodes coexist in the rhizosphere with very diverse microorganisms, many of which are antagonists of the latter, since they exert some type of biological control (Sikora 1992). The biological control of nematodes encompasses very diverse organisms that live in the soil, including viruses, rickettsiae, bacteria, nematophagous fungi, protozoa and tardigrades, as well as predators such as turbellaria, nematodes, enchytraeidae, mites, collembola and other insects (Kerry, 1995). Out of the foregoing, fungi and bacteria show the greatest potential as biological control agents (BCA) (Spiegel *et al.,* 2005). According to Mahdy, M., 2002, the fungi include species such as *Arthrobotrys, Paecilomyces,* and *Verticillium* (or *Lecanicillium*) (JP11246323, DE202005020816, CN1663394 among many others), while among the bacteria, *Pasteuria penetran* (EP0217378, EP1967068), several strains of *Bacillus* (EP1922931, EP1967068, US6004774, US5651965, US5378460, US5350577, Sela *et al.* 1998, Giannakou, *et al.* 2004, Guo *et al.* 2008) and *Tsukamurella paurometabolum,* stand out and they can be used as effective biopesticides (EP2154121, Mena, 2002).

A large number of bacteria have been used as biological control agents in different crops and have enormous potential for the control of nematodes. For years, the use of pesticides based on *Bacillus thuringiensis* (Bt) was limited to controlling pests produced by a narrow range of lepidopterous insects. However, in recent years it has been shown that these pesticides are very effective for a much wider range of pests. This is the case of species such as *B. thuringiensis* subsp. *israelensis, B. thuringiensis* subsp. *morrisoni,* and others, which are used today for the control of dipterous insects and coleopterous insects, respectively. It has more recently been reported that Cry proteins, though specific and given their variety, are toxic to a much broader spectrum of insects. It is known today that the different strains of Bt are capable of producing more than 550 different toxins, some of which have nematicidal activity (Crickmore *et al.* 2009).

A widely used strategy for the biological control of nematodes is the use of organisms which colonize the rhizosphere, and particularly bacteria. These microorganisms can grow in the rhizosphere so they form a protective barrier for the roots against the attack of pathogens, therefore they are generally very effective as biological control organisms (Weller, 1988). Rhizobacteria have the ability of colonizing plant roots (Schroth and Hancock, 1982) and they also have a positive effect on plant growth.

Sikora (1992) indicated that between 7 and 10% of the bacterial isolates of the sugar beet, potato and tomato rhizosphere have antagonistic activity against cyst and nodule forming nematodes. Sikora and Hoffmann-Hergarten (1993) indicated that plant growth-promoting rhizobacteria (PGPR) have an important effect on the close relationship that is established between parasitic nematodes and their host plants, regulating the behavior of the nematodes during the early phase of penetration of the parasite in the root, which is extremely important for crop yield.

In 1988, Sikora discovered that a *Bacillus subtilis* isolate was effective in the control of *Meloidogyne incognita* in cotton and sugar beet, *M. arenaria* in peanuts and *Rotylenchulus reniformis* in cotton. In 1994, Smith reported that *Bacillus* sp. Strain 23a reduced the density of *M. javanica* in tomatoes. *Pseudomonas fluorescens* strain Pf1 reduces the number of *M. incognita* nodules and eggs in tomato roots (Santhi and Sivakumar, 1995). Strain S18 of *Bacillus cereus* also reduces the density of *M. incognita* in tomatoes (Keuken, 1996). In addition, Giannakou, *et al.,* 2004, and Terefe *et al.,* 2009, demonstrated that the product Bionem, based on *Bacillus firmus,* has high activity in the control of *Meloidogyne* spp. in laboratory, pot and field conditions.

Another very important group among disease-causing organisms in plants are plant pathogenic fungi, which include species of the *Botrytis, Pythium, Rhizoctonia, Alternaria, Fusarium, Phytophthora, Thielaviopsis* and *Botryosphaeria* genera, among many others, which can survive for many years in soil.

Different mechanisms have been described to explain the biological control phenomenon of these pathogens, such as parasitism, cross protection, antibiosis, competition and resistance induction, among others (Shoda, 2000, Walsh *et al.* 2001).

One of the most widely studied ecological niches (relational position of a species in an ecosystem) is the rhizosphere due to the relations that are therein established between plants and other organisms (Warrior, 2000). Since the 1980s, studies of the microorganisms of the rhizosphere as possible substitutes for chemical pesticides for controlling a wide range of pests and diseases have been conducted. Due to their abundant distribution in soil, their capacity to colonize plant roots and to produce a wide variety of beneficial compounds as well as antagonists of a large number of pathogens, these organisms are very suitable for the biological control of pests and diseases. (Anjaiah *et al.,* 1998; Hill *et al.,* 1994; Maurhofer *et al.,* 1991; Rodriguez, and Pfender. 1997; Ross *et al.,* 2000 and Thomashow *et al.,* 1997).

Microbial groups of the rhizosphere which have been widely studied as biological control agents of pests and diseases produced by microorganisms include the one consisting of fungi. The same has been successfully used in the control of pathogenic fungi belonging to the *Botrytis, Fusarium, Pythium, Phytophthora, Rhizoctonia, Sclerotinia. Penicillium,* and *Macrophomina* genera and others (Whipps and Lumsden, 2001, McQuilken *et al.,* 2001, Jones and Whipps, 2002, among others). Given their diverse metabolism, this microbial group is capable of producing a wide variety of substances useful for biological control. For these reasons, the number of fungi-based strains and products for this purpose is increasingly broader and varied (Cook *et al.,* 1996, Whipps, 1997, Fravel *et al.,* 1998, EPA USA 2006. US 6,306,386 and US 6,890,530 among others).

The group of PGPRs for the biological control of pests and diseases has also been widely studied. The essential particularity of agents of this type is that in addition to their protective effect, they have a great capacity to colonize the roots of the plants and a high plant growth stimulating power, which combines the protective effect with a general improvement of crop health, and therefore the plant is also more resistant to the attack of pathogens. This group of: agents has been used in diseases caused by plant pathogenic fungi belonging to the *Rhizoctonia, Fusarium, Pythium, Thielaviopsis, Penicillium. Alternaria* and *Botrytis* genera, among others (Emmert and Handelsman, 1999, Ligon, *et al.,* 2000, Cavaglieri, *et al.,* 2004 and Roberts, *et al.,* 2005, US 7,118,739, ES 2306600, WO 2008/113873, among others).

The *Pseudomonas* genus has been the object of a number of studies over the years as it is one of the most active and dominant agents in the rhizosphere (Geels and Schippers, 1983, de Freitas and Germida 1991, de la Cruz *et al.,* 1992, Ligon, *et al.,* 2000, US 7,087,424 ). Members of the genus produce different antibiotics which are closely related to the reduction and suppression of plant diseases. Another factor which plays a fundamental role in this phenomenon is the production of siderophores, which further contributes to plant growth by means of supplying iron. This ability is widespread in members of the *Pseudomonas* genus. However, the inability of the genus to produce resistance structures during growth limits to a certain extent the stability and effectiveness of the biopreparations obtained with strains of this genus.

The *Bacillus* genus has also been widely studied as it has great potential in this sense. Its main characteristics include the fact that it is omnipresent in soils of any type, combined with high heat tolerance, rapid growth in liquid media and the formation of resistance spores which allow it to survive for long periods of time. All this confers to the strains of the genus enormous potential as biocontrol agents. The United States Environmental Protection Agency (EPA) has over ten strains of different species of this genus registered as biopesticides and particularly biofungicides (EPA 2006). The main mechanisms associated with the biocontrol of plant pathogenic fungi by means of strains of this genus also include the production of antibiotics, siderophores, surfactants and hydrolytic enzymes, such as chitinases, among others (Utkhede, 1984, Acea *et al.,* 1988, Stanghellini and Miller 1996, Shoda 2000, Banat *et al.,* 2000, Zhang, *et al*., 2001, Ruiz-Garcia *et al.,* 2005, US 7,087,424 and EP1647188, ES 2306600, WO 2008/113873, among others).

Other genera of bacteria have also been studied as biocontrol agents, which include the *Enterobacter, Alcaligenes. Stenotrophomonas* and *Streptomyces* genera (McClure, *et al.,* 1998, Brewster *et al.,* 1997, Sabaratnam and Traquair, 2002, Cavaglieri *et al.,* 2004 and others).

In addition, the importance of microorganisms in the cycle of nutrients in the soil and their role in plant nutrition is well known. Their active participation in the decomposition and mineralization of organic matter, as well as in the fixation and release of nutrients of the soil, is crucial for maintaining plant productivity. The interactions which are established between the soil microorganisms and plant roots meet important nutritional requirements for both. The roots are directly influenced by the composition and density of the microbial community which is developed therein, this being known as the "Rhizosphere Effect" (Atlas, R.M. and Bartha, R., 1993) The practice of inoculating plants with plant growth-promoting microorganisms has been well known for many years (US 570,813).

A group of microorganisms having considerable importance in this phenomenon is that which participates in the solubilization of phosphorus from sources that would otherwise be inaccessible for plants (Kucey *et al.,* 1989). Many microorganisms are capable of assimilating insoluble phosphorus from the soil, releasing part of it in the form of soluble phosphates which can in turn be used by the plants, thus contributing to plant nutrition (Chabot *et al.,* 1993). It is generally accepted that the solubilization of phosphates in the soil is due to the production of organic acids and chelating oxo acids from sugars (Leyval and Barthelin 1989, Deubel and Gransee 1996, Yadav and Dadarwal, 1997). There are methods today which use phosphate-solubilizing microorganisms in fertilization (US. 5,912,398, ES 2234417, WO 2009/027544, among others).

The *Enterobacter* and *Pantoea* genera have been used in agriculture as phosphate solubilizers and for protection against plant diseases (Gyaneshwar et al., 1999, EP1116632 and EP1174030, ES 2149131, ES 2234417, WO 2009/027544, among others). The *Bacillus* genus has also been frequently used in plant growth stimulation and the solubilization of phosphates (RO 120556, CN 101439993, WO 2009/070966, among others).

Another aspect occupying a very important role in practice is the use of microorganisms of the rhizosphere which fix atmospheric nitrogen. This practice has also been known for many years (US. 1,212,196). A number of microorganisms have been used for this function, including bacteria of the *Rhizobium, Azotobacter* and *Azospirillum* genera (ES 2093559; US 5,951,978, ES 2234417, WO 2009/027544), and fungi of the *Saccharomyces, Hansenula* (US 6,596,273) and *Aspergillus* (US 4,670,037) genera, among others.

In the 1970s, several experiments conducted in Brazil determined the significant contribution of N₂ fixed for plants by different microorganisms, *Azospirillum* being among the main genera (Döbereiner and Day, 1976; Neyra and Döbereiner, 1977 among many others). Later studies for the quantification of the biological nitrogen fixation (BNF) in sugar cane in this country demonstrated that virtually 65% of the total accumulated N₂ was derived from the BNF, which represents about 150 kg N₂ x ha-1 x year-1, which led to the recommendation of reducing the use of nitrogenous fertilizers to a minimum (Döbereiner, 1989; Urquiaga and Döbereiner, 1990).

Bashan *et al.* (1990) demonstrated that not only is nitrogen the main element involved in the *Azospirillum*-plant relationship, but also phosphorus and potassium play a fundamental role in this relationship, concluding that regardless of the strain used, there will be quantitative change in the minerals taken up by the plant, significantly increasing some crops.

It must be pointed out that many authors coincide in indicating that the beneficial effects due to inoculation with microorganisms on plant growth are not only due to the solubilization of phosphates or to biological nitrogen fixation. There are mechanisms such as the production of plant hormones and siderophores, or the activity of the enzyme 1-aminocyclopropane-1-carboxylate deaminase, among others, which considerably contribute to this effect (Datta *et al.,* 1992, Chabot *et al.,* 1993, Deubel and Gransee 1995, Frietas *et al.,* 1997, El-Khawas *et al.,* 1998; Cassan *et al.* 2001 among others).

The associative development of the *Azospirillum* and *Bacillus* genera has been successfully carried out in biological nitrogen fixation and the solubilization of phosphates, demonstrating that there are no incompatibilities between both genera and that as the metabolic. regulation mechanisms are shown to be different, they can perform different functions in a given ecosystem (Sukumar, 2001, El-Komy, H.M. 2005, Tabrizi, et al. 2008). The mixed cultures of soil microorganisms, with different metabolic capacities can develop cooperative relationships between one another and with the plants making the adsorption of nutrients by the latter more efficient, and they can further produce plant growth-stimulating substances, increasing the productivity of crops and protecting them against pathogenic microorganisms. Strains of *Azospirillum* expressing *Bacillus* toxins have been successfully obtained in the attempt to obtain the benefits of both microorganisms (Goundera and Rajendrana 2001), although the current legal limitations on the release of genetically modified organisms (GMOs) has not allowed the massive introduction of strains of this type.

Current trends in inoculating plants with microorganisms are aimed at using mixed cultures (also called consortia) enhancing phenomena such as the protection against diseases produced by pathogenic organisms, the increase of the efficiency of the absorption of phosphorus through the roots, biological nitrogen fixation, plant growth stimulation through the production of plant growth regulating substances as well as siderophores, among others (ES 2093559; EP1166632; US 5,147,441; US 6,277,167 and US 6,596,273 WO 00/51435). This practice has been shown to be the most effective in biofertilization. Further background can be found in US 5,071,4623, US 5,578,486, WO93/19604, WO 00/73244, WO 00/64837, WO 02/20431, WO 02/070436. In addition, strains of *Bacillus thuringiensis* with bionematicidal activity are described in documents US 5,378,460 and WO 99/09819.

A very important aspect to be taken into account in biological control is the use of mixtures or combinations of different control agents, particularly if they have different mechanisms of action, which can eventually be complementary. In fact, in practice this is the phenomenon that occurs in nature, so its use may be very beneficial. These combinations of microorganisms have generally demonstrated greater efficacy by combining effects of plant growth promotion and nutrition with the inhibition or suppression effect of different pests and diseases, so they are presented as an alternative with great potential for their use in agriculture. However, it is very important to take into account for the preparation of products of this type that no component of the mixture has inhibitory action on another component or that no component can interfere excessively with the normal microbiota of the ecosystem (Whipps, 2000). One of the most important problems in the production of biopreparations of this type is achieving technology that is accessible from the practical point of view of production and formulation.

### Brief Description of the Invention

The object of the present invention is a liquid or solid biological preparation which has strong nematicidal activity and further has the rooting and growth enhancing and biofertilizing capacity in seedbeds, nurseries, greenhouses and plant production generally. The product consists of a microbial preparation containing cells of new isolates of *Bacillus thuringiensis* strain N₁₁, *Bacillus mojavensis* strain SR₁₁ and *Azospirillum brasilense* strain ALo₁ isolated by the authors of the present invention. Said microorganisms have been deposited in the Spanish Type Culture Collection (CECT) and have been assigned accession numbers CECT-7665, CECT-7666 and CECT-5856 respectively. The bacteria were identified by the authors and identification was further requested at CECT, their identity being verified. The mentioned preparation consists of a liquid or solid product, formed by the bacterial cells and further containing the necessary components to assure their survival during storage, as well as in the environment, after their application in the treatment of plants. Said preparation is a microbial consortium formed by *Bacillus thuringiensis* N₁₁ with a great antagonistic capacity of plant pathogenic nematodes, *Bacillus mojavensis* strain SR₁₁ with synergistic action in the antagonistic activity of plant pathogenic nematodes and important efficiency in the solubilization of phosphates and other minerals in the soil, as well as the capacity to produce plant growth stimulating substances and further containing *Azospirillum brasilense* strain ALo₁, an atmospheric nitrogen fixer with a high capacity for producing plant growth promoting substances. Said consortium has high nematicidal capacity and further presents rooting and plant growth promoting activity, and it is an excellent plant health enhancer.

The microorganism *Bacillus thuringiensis* N₁₁, CECT-7665, is another object of this invention. It was obtained using a process combining the isolation in solid medium and the selection by means of a sequential screening process, growth in agar media for determining different enzymatic activities. Their nematicidal capacity in bioassays against breed 2 of *Meloidogyne incognita* was later determined based on their egg-killing power in plates and for inhibiting the formation of nodules in cucumber *in vitro.* Strain N₁₁ further has the capacity to solubilize phosphates and other minerals in soil which was demonstrated through its culture in solid medium and determining solubilized PO₄³⁻ in stirred liquid media, using Ca₃PO₄ in both cases as a single source of phosphorus. It was demonstrated by means of HPLC analysis and bioassays in insects that *Bacillus thuringiensis* strain N₁₁ does not produce β-exotoxins. Said strain is capable of degrading lecithin as well as collagen.

Another object of the present invention is the microorganism *Bacillus mojavensis* SR₁₁ CECT-7666. It was obtained using a process combining isolation in agar media with IN Tris HCl pH 8 buffer by areas of agar clearance (Gyaneshwar *et al.* 1999) and selection by means of determining solubilized PO₄³⁻ in stirred liquid media (Nautiyal 1999), using Ca₃PO₄ in both cases as a single source of phosphorus. The capacity for fixing atmospheric nitrogen was established by culturing said strain in nitrogen-free semi-solid NFb medium (Kreig and Döbereiner, 1984). The presence of the enzyme 1-aminocyclopropane-1-carboxylate deaminase was verified through growth in solid medium with 1-aminocyclopropane-1-carboxylic acid (ACC) as a single source of nitrogen (Penrose 2001).

The microorganism *Azospirillum brasilense* ALo₁ CECT 5856 is also an object of the present invention. It was obtained by means of a process combining the isolation in semi-solid NFb medium (Kreig and Döbereiner, 1984) and the selection through its plant growth stimulating capacity and its capacity for producing auxins and other plant hormones. It was verified by means of these bioassays that the strain ALo₁ has a strong plant growth stimulating effect that is much greater compared to the other assayed isolates. The production of indole-3-acetic acid (IAA) was verified by colorimetric (Pilet and Chollet 1970) and HPLC (Olivella *et al.* 2001) methods, and the presence of other plant hormones of the type cytokinins was also detected. Concentrations of 100-180 mg x mL-1 and a transformation percent of up to 90% of this amino acid are achieved in the production of IAA, in 200 mg x L-1 of tryptophan. The activity of the enzyme 1-aminocyclopropane-1-carboxylate deaminase present in this strain was also verified through the growth in media with 1-aminocyclopropane-1-carboxylic acid (ACC) as a single source of nitrogen (Penrose 2001).

The capacity of the bionematicide for stimulating plant growth was verified by means of laboratory and greenhouse bioassays according to the methods described by Bashan *et al.* 1986, Fernández 1995 and Bashan 1998.
The bionematicidal and plant growth stimulator biological preparation according to the present invention is characterized by the fact that it has stability of up to six months at room temperature, where the stability is assured by means of using microbial growth inhibitory substances.
Always according to the present invention, the bionematicidal and plant growth stimulator biological preparation is also characterized in that it has stability of up to one year at room temperature in case the stability is assured by means of a spray drying process using cell viability protecting substances.

Another object of this invention patent is the method for producing the strains and the culture broths used in the mentioned preparation, which consists of four steps:
- Propagating strain N₁₁ in immersed culture in a specific medium which stimulates sporulation and the capacity for producing proteolytic and chitinolytic enzymes and which contains high pesticidal activity in its composition at the end of fermentation.
- Propagating strain SR₁₁ in a culture medium which stimulates sporulation and the capacity for producing surfactant substances and which contains fungicidal activity and rooting and plant growth stimulating capacity in its composition at the end of fermentation.
- Propagating strain ALo₁ in a medium based on natural substances and mineral salts in which a high concentration of rooting and plant growth promoting substances is furthermore produced.
- Final mixing of these three fermented broths in proportional parts, which results in a liquid with a high cell concentration, greater than 10⁹ colony forming units (CFU) x mL-1, and a strong pesticidal activity against plant pathogenic nematodes, as well as a considerable rooting and plant growth stimulating capacity and effectively contributing to plant health and nutrition.

The methods for obtaining the formulations are also objects of this invention, which consist of the following steps:
Liquid formulation:
- A chitosan solution is added to the liquid obtained by the previous method in such a proportion that it has a final concentration of 0.1-1% and is stirred until complete dissolution. The product thus formulated has a stability at room temperature not less than 6 months.

Cell immobilization in solid formulation:
• The following components are added to the liquid obtained by means of the method for producing the strains and the culture broths by stirring continuously:

| | |
|---|---|
| skimmed milk | 1-3% |
| sucrose | 2-4% |
| maltodextrin | 3-5% |

• Stirring continues for one hour to allow the interaction among the different components and then it is fed to a spray dryer to carry out the drying process up to a final humidity of 4-6%

The process of encapsulating the composition developed by means of spray drying has allowed assuring the stability of the preparation for not less than one year and facilitating the application thereof. These methods have been used successfully by the authors in forming other microbial preparations for biological control and biofertilization.

### Brief Description of the Drawings

Figure 1 shows a bioassay of cucumber seedlings in gnotobiotic culture.
Figure 2 illustrates a bioassay in trays of tomato plants in a culture chamber.
Figures 3 and 4 show examples of determinations performed from watermelon plants treated with the biopesticide (Figure 3) and of untreated control plants (Figure 4).
Figure 5 and 6 illustrate examples of visual determinations performed from assays of tomato plants treated with the biopesticide (Figure 5) and of untreated control plants (Figure 6).
Figures 7 and 8 illustrate examples of visual determinations performed from assays of cucumber plants treated with the biopesticide (Figure 7) and of untreated control plants (Figure 8).
Figures 9 and 10 show examples of visual determinations performed from assays of cauliflower plants treated with the biopesticide (Figure 9) and of plants treated with Vydate (Figure 10).
Figure 11 shows a three-dimensional diagram showing the comparison of the means of the different treatments explained.

### Detailed Description and Embodiment of the Invention

The liquid product obtained was subjected to different evaluations by means of *in vitro* bioassays, as well as experimental greenhouse and filed assays in production conditions. The results of said evaluations are presented below.

First, *in vitro* assays were performed to determine the antagonistic capacity against parasitic nematodes of the *Meloidogyne* genus for which purpose a bioassay was carried out using the gnotobiotic culture of cucumber seedlings in agar (Femández 2004). The methodology is summarized as follows:

### Preparation of the bioassay

Commercial Marketmore 76 variety cucumber seeds are immersed in a 5% sodium hypochlorite solution for 3 minutes. They are subsequently washed with abundant sterile distilled water. They are then placed to germinate for 72 hours in a humid chamber. The germinated seeds are transplanted to 60 mL plastic tubes with a conical bottom (3x9 cm), containing 30 mL of nutritive agar-solution (Hoffland, *et al.* 1989) and are placed in a culture chamber at 25°C, 80% humidity with light cycles comprising 16 hours of light and 8 hours of darkness. Once the first true leaf appears, the plants are subjected to the treatments with the product to be assayed.

### Treatments

Two types of treatments were performed: infecting the plants by means of a mixed inoculum of young and adult *Meloidogyne* sp. and eggs thereof and subsequently treating with the product and vice versa, first treating the plants and then infecting them with the nematodes. A 24 hour interval is left between one inoculation and the next in both treatments.

### Preparation of the infective inocula

A mixed infective inoculum was prepared for the purpose of carrying out the selection based on the antagonistic capacity against the different stages of the biological cycle of the pathogen. Pieces of roots are taken from tomato plants infected with breed 2 of *Meloidogyne incognita* which present abundant symptoms of the disease and the nodules are extracted and washed with running water, and then they are gently broken with a manual blade mixer in the smallest possible amount of water. This suspension, with the different physiological stages of pathogen, is used to infect the plants. The assay is performed with at least 5 tubes per treatment.

### Determination of the antagonistic capacity

After 10 days of incubation, the formation of nodules in the roots of the infected seedlings treated with the product and the untreated controls is evaluated. It is considered that there has been nematicidal activity when there is at least a 50% reduction of the infected tubes with respect to the control. The assayed product had an effectiveness of 80-100% in the inhibition of the formation of nodules in the multiple repetitions that were carried out.

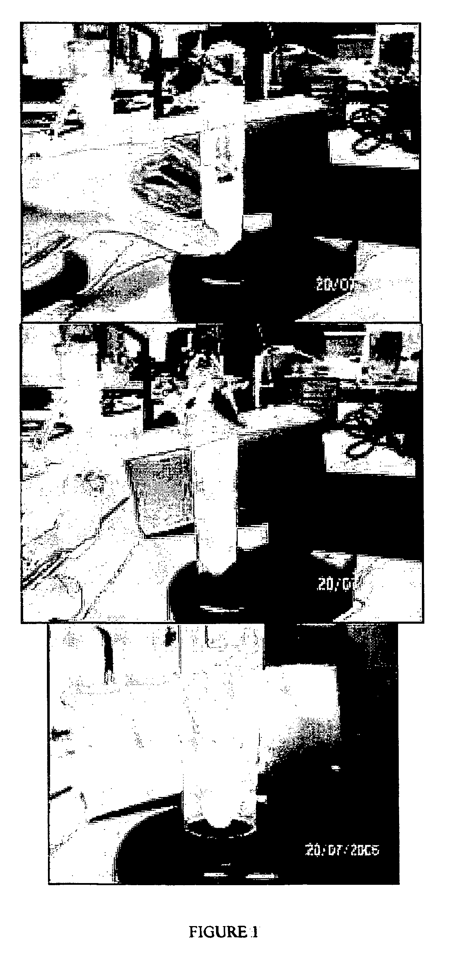

Figure 1 shows photographs of the cucumber seedlings during the bioassay. The nodules formed in the roots can be observed in the lower middle image of this figure.

### Bioassay of gnotobiotic culture of plants in agar

Then an *in vitro* bioassay was carried out in trays using tomato plants from a seedbed. This step is performed to confirm the results obtained in the previous bioassay, but in another culture and in more realistic conditions. This bioassay consists of the following:

### Preparation of the bioassay

Raf variety tomato plants are taken from the seedbed and the roots are immersed in the infective inoculum overnight. Then they are transplanted in 44x27x7 cm trays containing previously sterilized vermiculite as a substrate to which a nutritive Hoagland solution (Hoagland and Arnon 1950) has been added. They are subsequently treated with the bacterial inoculum, which is added to the tray by means of irrigation. The plants are then placed in a culture chamber at 25°C, 80% humidity and with light cycles comprising 16 hours of light and 8 hours of darkness for 15 days.

### Preparation of the infective inocula

Like in the bioassay in tubes, a mixed infective inoculum was prepared for the purpose of carrying out the selection based on the antagonistic capacity against the different physiological stages of the biological cycle of the pathogen. Pieces of roots are taken from tomato plants infected with breed 2 of *Meloidogyne incognita* which present abundant symptoms of the disease and the nodules are extracted and washed with running water, and then they are gently broken with a manual blade mixer in the smallest possible amount of water.

### Determination of the antagonistic capacity

After 15 days, the number of nodules formed in the roots of the plants infected and treated with the different isolates, as well as the untreated controls, is evaluated. It is considered that there has been nematicidal activity when there is at least a 50% reduction with respect to the control.

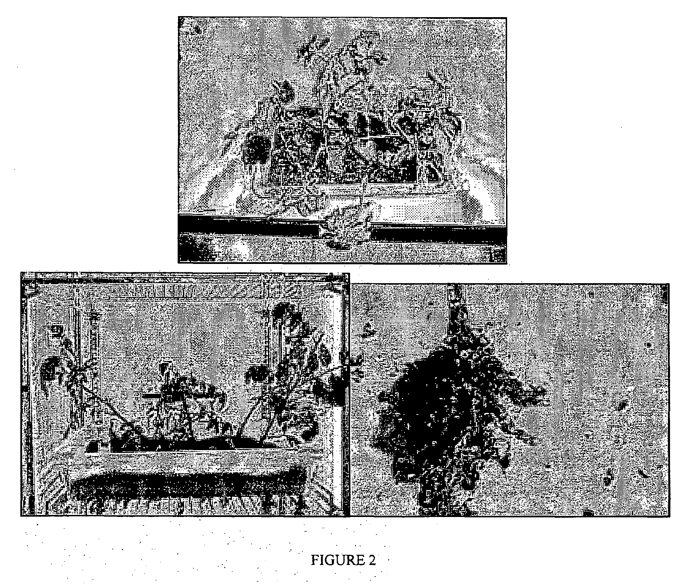

As can be seen in Figure 2, the cultivation in trays allows better development of the pest, which enables greater formation of nodules and a more precise evaluation of the nematicidal activity of the isolates and the products prepared.

### Bioassay of plants in trays using vermiculite as a substrate

A mixture of two strains of the genus *Bacillus,* N₁₁ and SR₁₁, was selected at the end of the screening process given that it gave better results than any of the isolates individually.

Strain ALo₁ was added to the product thus prepared given its strong plant growth stimulating activity for the purpose of considerably improving plant health and reinforcing its resistance to the attack of pathogenic organisms.

### Plant Growth Stimulation Bioassays

To determine the plant growth stimulating capacity, bioassays were carried out in experimental greenhouse aimed at determining the effects of the products on different crops of commercial interest. This type of assay was performed in pots and plant boxes of different volumes.

The fresh weight of the green tissue or aerial part as well as the fresh weight of the root was determined as an evaluation criterion.

The results of these bioassays were generally very positive concerning the rooting and the plant growth stimulating capacity of the prepared products. Diagram 1 shows the results obtained in the cultivation of lettuce for the liquid bionematicidal formulation. As can be seen, all the treatments stimulated plant growth and rooting with respect to the control. Of all the assayed treatments, the one which give the best results was the bionematicidal product. These results were repeated in the different cultures assayed.

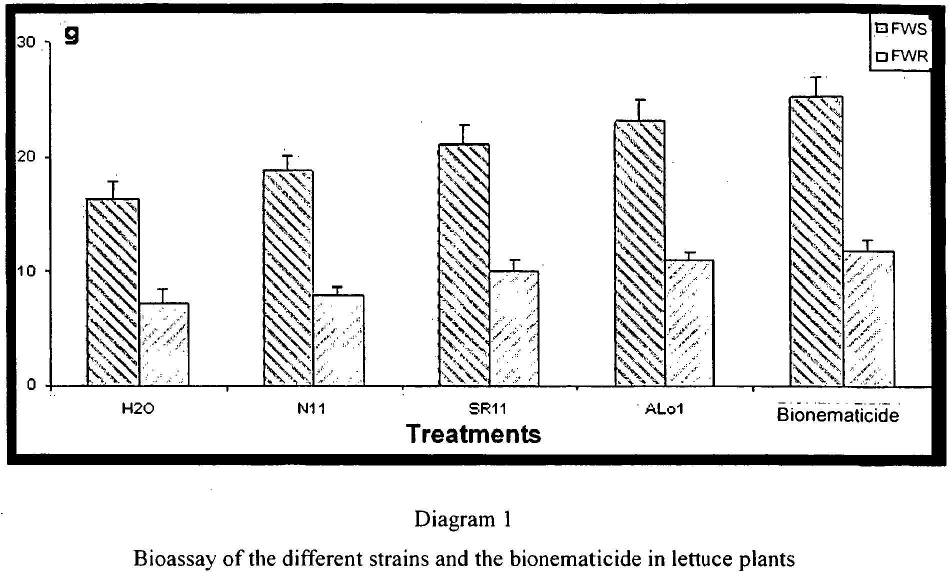

### FIELD ASSAYS

### DRIP IRRIGATION ASSAYS GENERAL INFORMATION OF THE ASSAY

| | Assay 01 | Assay 02 | Assay 03 |
|---|---|---|---|
| Crop/Variety | Watennelon / Dulce Maravilla | Tomato/Magnitud | Cucumber/Tritón |
| Scientific name | Citrus lanatus | Lycopersicon esc. M. | Cucumis sativus |
| Conditions | Greenhouse | Greenhouse | Greenhouse |
| Irrigation system | Localized | Localized | Localized |
| Type of soil | Sandy loam | Sandy loam | Sandy loam |
| Planting date | 24/02/09 | 20/06/09 | 2/07/09 |
| Planting pattern | 2 m x 1.30 m | 2m x 0.5m | 2m x 0.5m |
| Planting density | 3,846 plants/ha | 10,000 plants/ha | 10,000 plants/ha |

### BIOPESTICIDE DATA

| Type of formulation | Soluble liquid |
|---|---|
| Composition | Bacillus thuringiensis strain N₁₁ |
| | Bacillus subtilis strain SR₁₁ |
| | Azospirillum brasilense strain ALo₁. |
| Total concentration | > 10⁹ CFU/mL |
| Use of the product | Nematicide and plant growth promoter |

### APPLICATION DATA

| | Assay 01 | Assay 02 | Assay 03 |
|---|---|---|---|
| Method, of application | Drip irrigation | Drip irrigation | Drip irrigation |
| Volume of water by irrigation | 7500 L/ha | 7300 L/ha | 7300 L/ha |
| No. of applications | 2 Applications. | 3 Applications. | 3 Applications. |
| Date of applications | 1^{st}- Application: 13-03-09 | 1^{st}- Application: 19-06-09 | 1^{st}- Application: 03-07-09 |
| | | 2^{nd}-Application: 03-07-09 | 2^{nd}- Application: 17-07-09 |
| | 2^{nd}- Application: 27-03-09 | 3^{rd}-Application: 17-07-09 | 3^{rd} -Application: 31-07-09 |
| Phenological states (BBCH) | BBCH 63 | BBCH 13 | BBCH 13 |
| | BBCH 71 | BBCH 19 | BBCH 19 |
| | | BBCH 31 | BBCH 31 |
| Product per hectare | 30 L/ha | 30L/ha | 30 L/ha |
| | (20 L/ha 1^{st} application) | (Each application10 L/ha, 3 applications) | (Each application 10 L/ha,3 applications) |
| | (10 L/ha 2^{nd} application) | | |

### SURFACE-RELATED DATA

| | Assay 01 | Assay 02 | Assay 03 |
|---|---|---|---|
| Control surface (m²) | 300 m² | 2,000 m² | 1000 m² |
| Treated plot surface (m²) | 300 m² | 2,000 m² | 1000 m² |

### THESIS-RELATED DATA

| Assay 01 | | |
|---|---|---|
| Thesis | TREATMENT | Dose |
| No. 1 | CONTROL | - |
| No. 2 | BIOPESTICIDE | 30 L/ha |
| | | (20 L/ha 1^{st} application) |
| | | (10 L/ha 2^{nd} application) |

| Assay 02 | | |
|---|---|---|
| Thesis | TREATMENT | Dose |
| No. 1 | CONTROL | - |
| No. 2 | BIOPESTICIDE | 30 L/ha |
| | | (10 L/ha each application, 3 applications) |

| Assay 03 | | |
|---|---|---|
| Thesis | TREATMENT | Dose |
| No.1 | CONTROL | - |
| No. 2 | BIOPESTICIDE | 30 L/ha |
| | | (10 L/ha each application, 3 applications) |

### DESIGN USED IN THE ASSAY. DISTRIBUTION OF THE THESES IN THE ASSAY

The assay is approached with a random distribution of the theses as follows:

| | |
|---|---|
| Control plot | Treated plot |

### DETERMINATION-RELATED DATA. EFFICACIES

Evaluation, description and methods: Soil samples are taken to determine the evolution of the nematode populations and the general appearance of the plants of the different theses is assessed.

### Results:

### ASSAY 01:

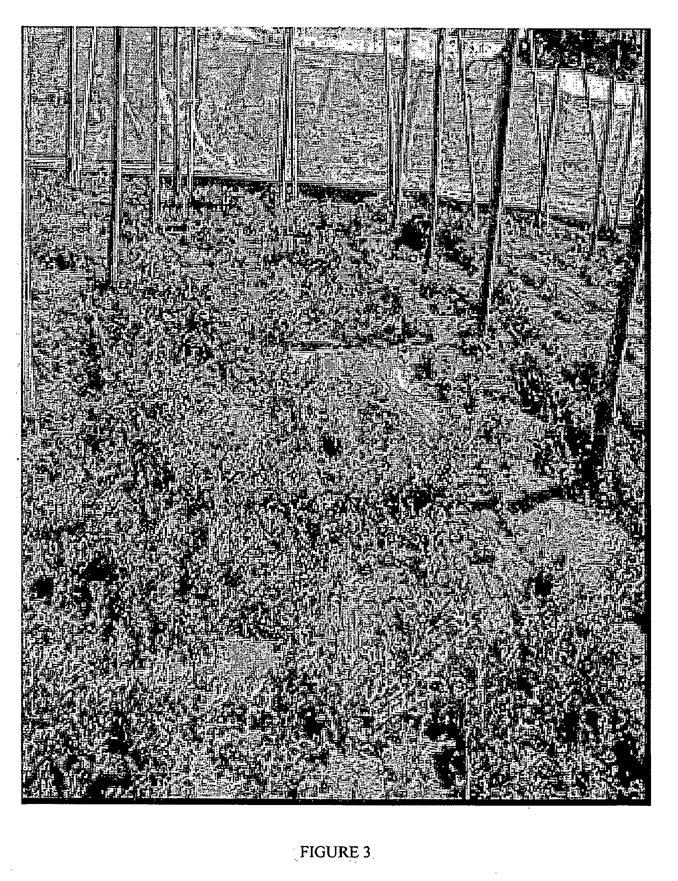

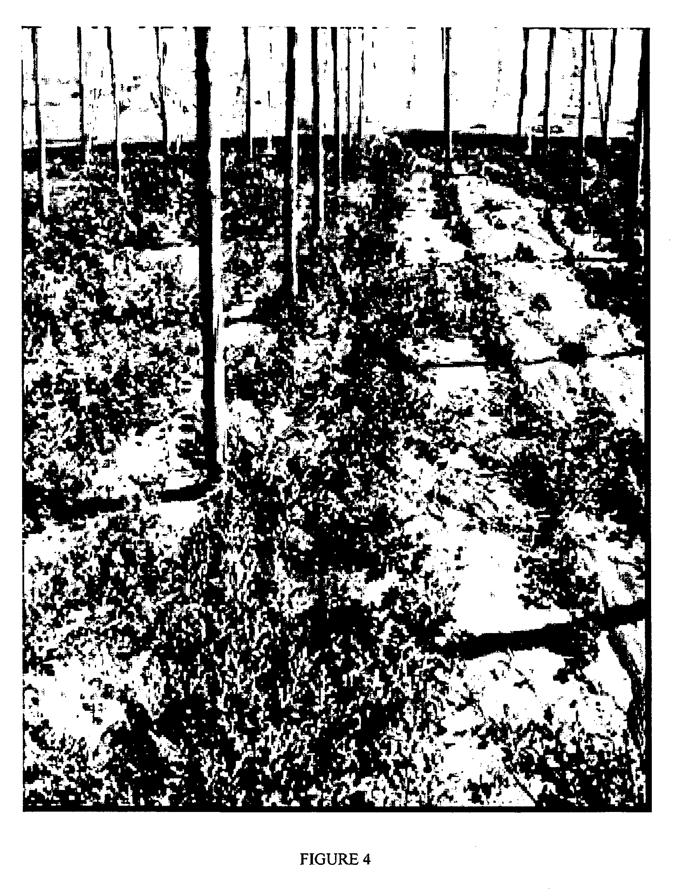

From the determinations performed, it could be observed (Figures 3 and 4) that there was a considerable difference between the two theses; in the control plot there was a loss of vigor and color in the plants, as well as a smaller leaf mass, a difference of the plants to which was applied the biopesticide, where the growth was greater and the green color more intense. This generally demonstrates the plant growth stimulating character of the product.

**Table 1. Summary of the results of the nematological analyses**

| 1^{st} Biopesticide treatment | | | |
|---|---|---|---|
| | Total | Parasites | No Pat |
| 26/03/2009 | 1100 | 254 | 846 |
| 09/03/2009 | 2090 | 615 | 1475 |
| % Reduction | 47.4 | 58.7 | 42.6 |

| 2^{nd} Biopesticide treatment | | | |
|---|---|---|---|
| | Total | Parasites | No Pat |
| 27/04/2009 | 2080 | 520 | 1560 |
| 09/03/2009 | 2090 | 615 | 1475 |
| % Reduction | 0.5 | 15.4 | -5.8 |

**Table 2: Differences betvveen the two theses**

| Increase of the untreated control | | | |
|---|---|---|---|
| | Total | Parasites | No Pat |
| 27/04/2009 | 9790 | 1241 | 8369 |
| 09/03/2009 | 2090 | 615 | 1475 |
| % increase | 78.7 | 56.7 | 82.4 |

| Differences between one treated with biopesticide and one untreated | | | |
|---|---|---|---|
| | Total | Parasites | No Pat |
| 27/04/2009 | 2080 | 520 | 1560 |
| 09/03/2009 | 9790 | 1421 | 8369 |
| % Reduction | 78.8 | 63.4 | 81.4 |

The parasites of the *Praylenchus* and *Tylenchorhynchus* genera predominate.

It can be inferred from Tables 1 and 2 that there was a drastic reduction of the number of nematodes in general and of the plant pathogens in particular, the pest being controlled at all times. This also corresponds with the general appearance of the plants. The product has demonstrated that not only is it an effective bionematicide, but that by means of plant growth stimulation, it makes plants healthier and resistant to the attack of pathogens.

### ASSAY 02:

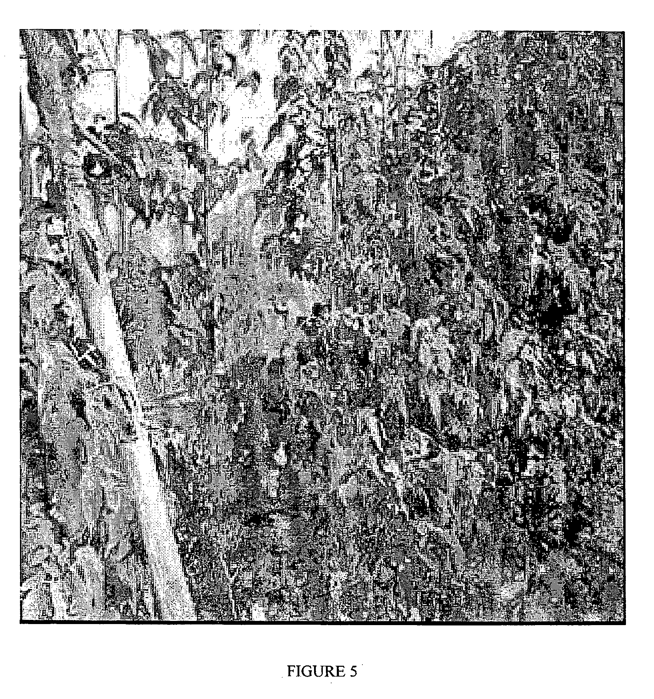

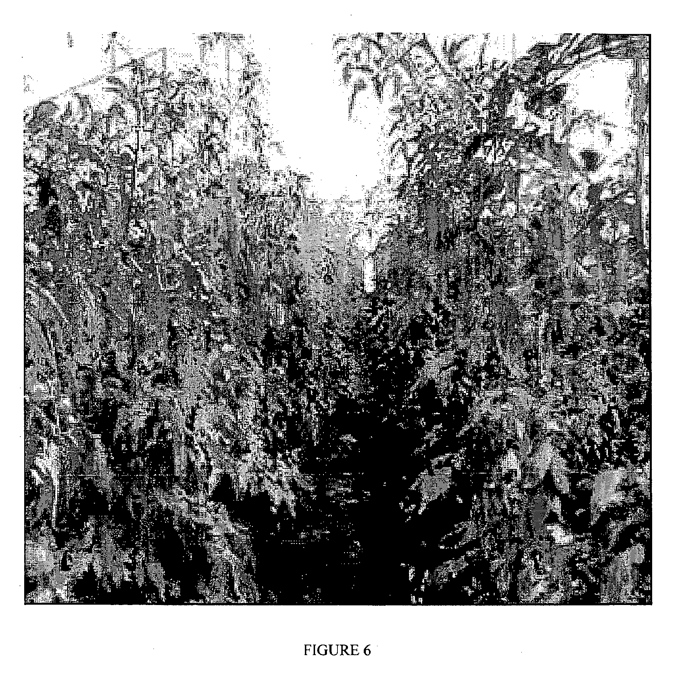

It could be observed from the visual determinations (Figures 5 and 6) that there was a considerable difference between the two theses; a loss of vigor and color in the plants, as well as smaller leaf mass was observed in the controls, unlike the plants in which the biopesticide was applied, where the growth was greater and the green color more intense. Here the capacity of the product for stimulating plant growth is also demonstrated.

**Table 3: Summary of the results of the analysis**

| | Total | Parasites | No. Pat |
|---|---|---|---|
| A. INITIAL 18/06/09 | 7.700 | **2.880** | **4,813** |
| CONTROL 29/07/09 | 7.460 | 3.879 | 3,584 |
| BIOPESTICIDE 29/07/09 | 980 | 231 | 749 |
| % REDUCTION | 87% | 94% | 79% |

The parasites of the *Pratylenchus* and *Tylenchorhynchus* genera predominate.

In this assay, a high reduction of the nematode populations, as well as good plant growth stimulation, was also observed, being very effective in the control of the pest, which can be seen in Table 3.

### ASSAY 03:

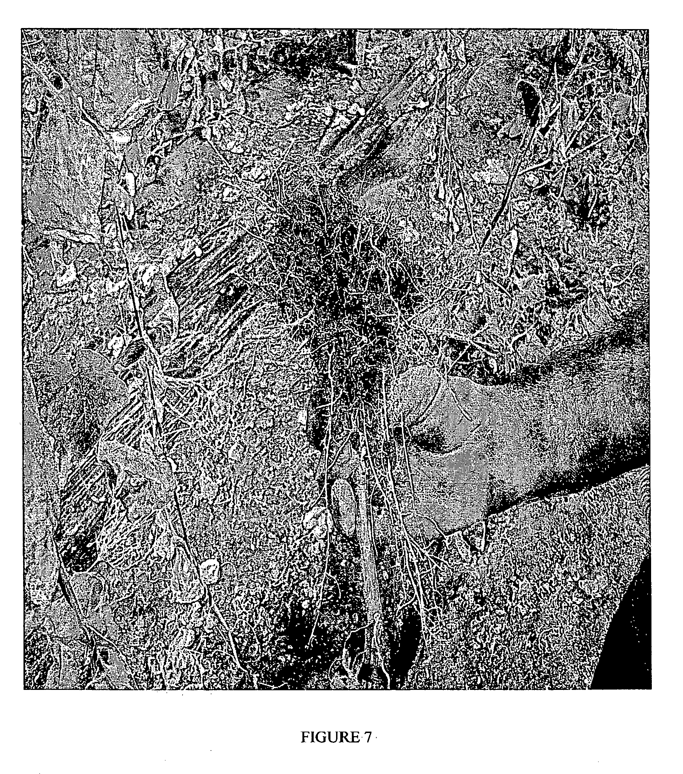

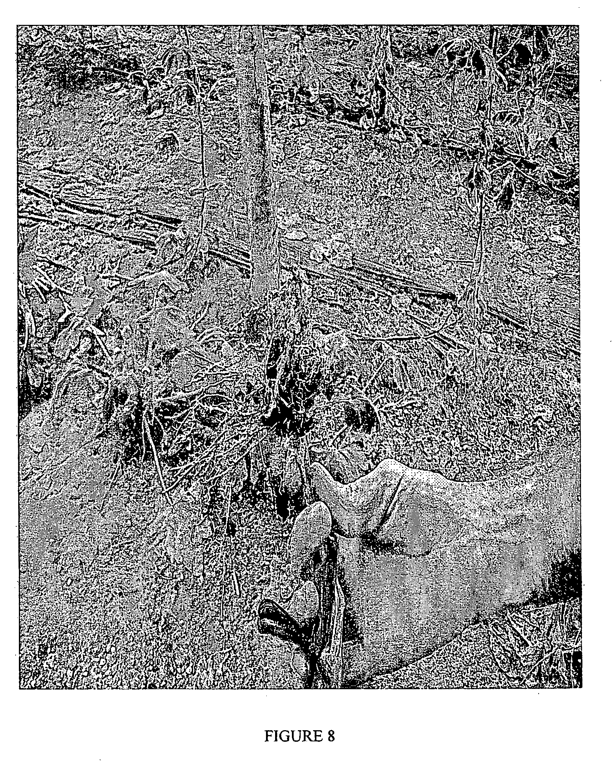

A considerable difference between the two theses (Figures 7 and 8) could be observed from the visual determinations, like in the previous cases. The plants treated with the biopesticide have a much greater leaf mass and its appearance is generally healthier than the control plants. The root system in the latter is much less developed and in photograph 6, the attack of nematodes is clearly observed, unlike the treated plants which have a much greater root mass and a high presence of secondary roots and absorbent hairs which corroborates the nematicidal and plant growth stimulating character of the product.

A considerable reduction of the nematodes in general and of the plant pathogens in particular could also be observed here, like in the previous assays, which ratifies the nematicidal capacity of the biopesticide product. Particularly in this assay, given the presence of the *Meloidogyne* genus, in addition to the nematological analysis, the absence of nodules characteristic of infection by this genus can be seen in Figure 7, unlike Figure 8, where such nodules are clearly observed in the untreated plants, which demonstrates the capacity of the biopesticide for the control of plant pathogenic nematodes.

**Table 4: Summary of the results of the analysis**

| | Total | Parasites | No. Pat |
|---|---|---|---|
| A. INITIAL 2/07/09 | 2080 | 520 | 1560 |
| CONTROL 17/09/09 | 1580 | 758 | 822 |
| BIOPESTICIDE 17/09/09 | 860 | 0 | 860 |
| % REDUCTION | 58% | 100% | 45% |

The parasites of *the Meloidogyne* and *Pratylenchus* genera predominate.

### ASSAY IN FLOOD IRRIGATION

**GENERAL INFORMATION OF THE ASSAY**

| Crop/Variety | Cauliflower |
|---|---|
| Scientific name | *Brassica oleracea* L |
| Conditions | Open air |
| Irrigation system | Flood |
| Type of soil | Sandy loam |
| Planting date | 25/09/09 |
| Planting pattern | 0.65 m x 0.50 m |
| Planting density | 28,000 plants/ha |

**BIOPESTICIDE DATA**

| Type of formulation | Soluble liquid |
|---|---|
| Composition | *Bacillus thuringiensis* strain N₁₁ |
| | *Bacillus subtilis* strain SR₁₁ |
| | *Azospirillum brasilense* strain ALo₁. |
| Total concentration | >10⁹ CFU/mL |
| Use of the product | Nematicidal and plant growth promoter |

### REFERENCE NEMATICIDAL PRODUCT DATA

Vydate: 10% Oxamyl w/v SL

**APPLICATION DATA**

| Method, equipment, type of application | Application by flood irrigation |
|---|---|
| No. of applications during the assay | 3 Applications |
| Date of the applications | 1^{st}- Application: 15-10-09 |
| | 2^{nd}- Application: 06-11-09 |
| | 3^{rd}- Application: 20-11-09 |
| Phonological states (BBCH) | BBCH 31 |
| | BBCH 33 |
| | BBCH 41 |
| Product per hectare | 30 l/ha |
| | (10 l/ha 1^{st} application) |
| | (10 l/ha 2^{nd} application) |
| | (10 l/ha 3^{rd} application) |

**SURFACE-RELATED DATA**

| | |
|---|---|
| Control surface (m²) | 1000 m² |
| Treated plot surface with biopesticide (m²) | 4000 m² |
| Treated plot surface with 10% OXAMYL (m2) | 5000 m2 |

**THESIS-RELATED DATA**

| Thesis | COMMERCIAL NAME | Dose |
|---|---|---|
| No. 1 | CONTROL | - |
| No. 2 | BIOPESTICIDE | 30 l/ha |
| | | (10 l/ha 1^{st} application) |
| | | (10 l/ha 2^{nd} application) |
| | | (10 l/ha 3^{rd} application) |
| No. 3 | VYDATE | 30 l/ha |
| | | (20 l/ha 1^{st} application) |
| | | (10 l/ha 2^{nd} application) |

### DESIGN USED IN THE ASSAY. DISTRIBUTION OF THE THESES IN THE ASSAY

The assay is approached with a random distribution of the theses as follows:

| | | |
|---|---|---|
| Control plot 1000 m² | Biopesticide plot 4000 m² | Vydate Plot 5000 m² |

### DETERMINATION-RELATED DATA. EFFICACIES

Evaluation, description and methods: Soil samples are taken to determine the evolution of the nematode populations and the general appearance of the plants of the different theses is assessed.

### Results:

As can be observed in Table 5, a reduction in the nematode content greater than 80% can be seen in all the cases with respect to the initial analysis after having applied 30 liters per hectare of the biopesticide, while with the application of Vydate reductions of over 60% are achieved. This demonstrates that the biopesticide is highly effective in the control of nematodes and even better than the reference chemical product, whereby establishing that in the culture used and in the assay conditions, the liquid product prepared based on the autochthonous strains N₁₁, SR₁₁ and ALo₁ was very effective in the control of plant pathogenic nematodes, at least of the present genera.

**Table 5. Summary of the results of the nematological analysis**

| | Total | Plant pathogens | No Plant pathogens |
|---|---|---|---|
| A. INITIAL 06/10/09 | 7910 | 3116 | 4794 |
| BIOPESTICIDE 01/12/09 | 1360 | 501 | 859 |
| % reduction BIOPESTICIDE | 82 | 84 | 82 |
| VYDATE 01/12/09 | 2870 | 1241 | 1489 |
| % reduction VYDATE | 64 | 60 | 69 |

The parasites of the *Pratylenchus, Ditylenchus* and *Tylenchorhynchus* genera predominate.

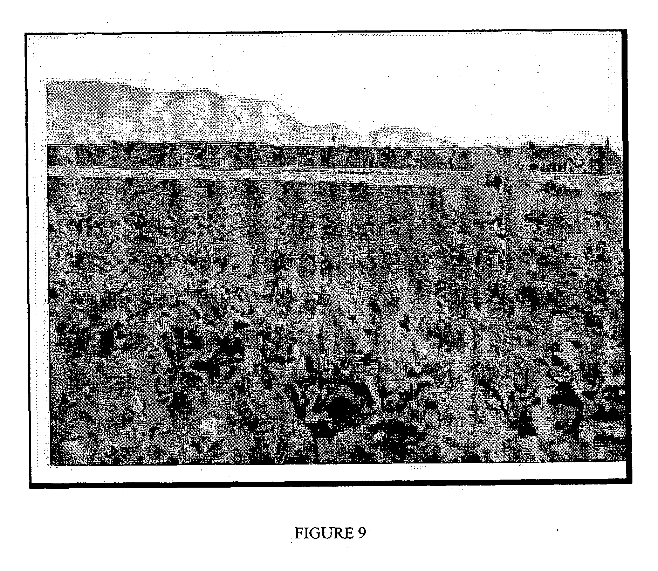

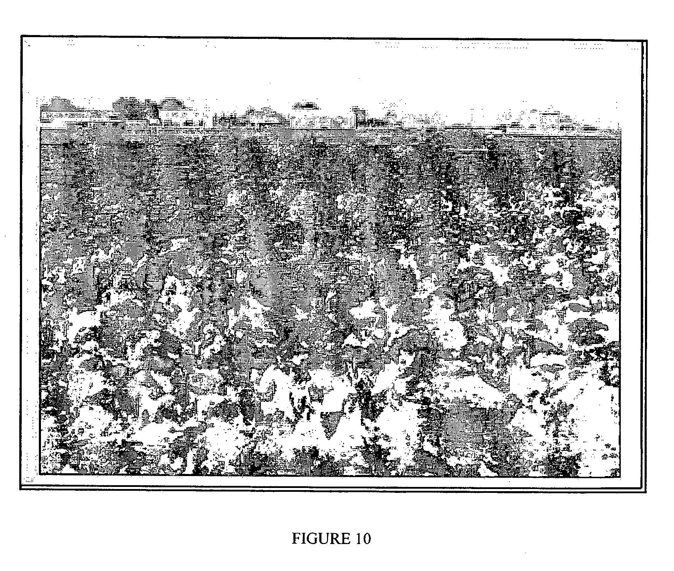

In addition, visual determinations of the different theses were carried out, observing differences between the different theses. In the control plot, a considerable difference of vigor and color, as well as a smaller leaf mass, was observed in relation to the plants treated with the biopesticide, which are similar to the plants treated with VYDATE. In the last two plots, the growth of the plants was greater and they had a much better appearance concerning color and leaf mass. As can be observed in the photographs in Figures 9 and 10, there was no significant difference between these treatments.

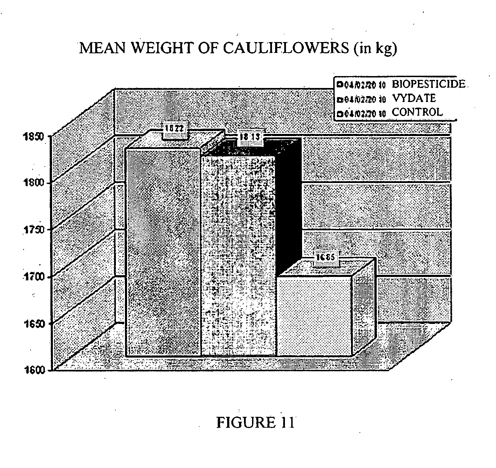

The day of the harvest 50 pieces of cauliflower per thesis were weighed to see the possible weight differences. The result is shown in Figure 11.

As can be seen in Figure 11, there are important differences concerning production where the nematicides have been applied with respect to the control plot.

Determinations of plant toxicity were also performed in all the assays performed:

The determination was performed on the entire surface occupied by each thesis, recording the possible toxicity of the formulation on the plants after the application.

The theses of the formulations were of particular interest.

The plants are observed, noting any modification in the development of the cycle (inhibition or failure of growth, phonological modification, failed flowering or fruits, the non-appearance of certain organs, etc.).

It was observed whether modifications existed in the amount or quality of the crop both qualitatively and quantitatively.

The attempt was made to detect morphological deformations (winding, atrophy, elongations, changes in size or volume of crown, wilting, etc.).

**Toxicity scale %**

| Scale value | Affected surface | Symptoms observed in the plant |
|---|---|---|
| 0 | 0 | Without plant toxicity |
| 1 | 0 to 5% | Start of plant toxicity, up to 5% of the surface |
| 2 | 5 to 10% | Presence of plant toxicity, from 5 to 10% affected surface |
| 3 | 10 to 25% | Moderate attack, from 10 to 25% affected surface |
| 4 | 25 to 50% | Strong attack, from 25 to 50% affected surface |
| 5 | 50 to 75% | Very strong attack, from 50 to 75% affected surface |
| 6 | 75 to 100% | Leaves completely affected, 100% affected |

### Results

There was no symptom of plant toxicity in the treated plants in any of the assays performed.

### Conclusions

In the efficacy tests performed with the biopesticide of the invention in the different cultures assayed applied in drip and flood irrigation at a dose of 30 L/ha, it was demonstrated that the product is capable of controlling the plant pathogen nematodes, producing a considerable reduction of the concentration thereof in the soil and roots of the plants of the order of 70-90% with respect to the untreated controls and greater than the reference chemical used in the case of the cauliflower assay. In this latter assay, the presence of galls could be seen in the control plants, unlike the theses in which the nematicides were applied.

A considerable difference between the two theses could be observed in the visual determinations; in the controls there was a loss of vigor and color in the control plants, as well as a smaller leaf mass, and the root system was less developed, which demonstrates the activity of plant pathogenic nematodes, unlike the plants in which the nematicides were applied, and particularly the biopesticide, where a few days after the first application it was already observed that the growth was greater and the green color more intense, which was maintained throughout the entire assay in each case. This generally demonstrated the plant growth stimulating character of the product.

Plant toxicity was not observed in any of the assays performed; in contrast, the effects of the product are related to a general improvement of plant health.

## Claims

1. A pure culture of the strain called N₁₁ of the *Bacillus thuringiensis* species, **characterized by** having high nematicidal activity, as well as collagenase activity, not producing β-exotoxin and having the capacity to solubilize phosphates, deposited in the Spanish Type Culture Collection (CECT) with number CECT-7665.

2. A pure culture of the strain called SR₁₁ of the *Bacillus mojavensis* species, **characterized by** its capacity to solubilize soil phosphates and stimulate plant growth, being capable of producing indole-3-acetic acid and growing in 1-aminocyclopropane-1-carboxylic acid (ACC) as a single source of nitrogen, said strain having been deposited in the CECT with number CECT-7666.

3. A pure culture of the strain called ALo₁ of the *Azospirillum brasilense* species, **characterized by** producing indole-3-acetic acid with a conversion percent of between 70 - 90% of the tryptophan added in the culture medium, siderophores and other plant growth regulating substances, as well as atmospheric nitrogen fixation with growing capacity in 1-aminocyclopropane-1-carboxylic acid (ACC) as a single source of nitrogen, deposited in the Spanish Type Culture Collection (CECT) with number CECT-5856.

4. A bionematicidal and plant growth stimulator biological preparation, **characterized by** containing *Bacillus thuringiensis* strain N₁₁ (CECT-7665), *Bacillus mojavensis* strain SR₁₁ (CECT-7666) and *Azospirillum brasilense* strain ALo₁ (CECT-5856).

5. Process for the preparation of the bionematicidal and plant growth stimulator biological preparation according to claim 4, **characterized in that** cell concentrations is greater than 10⁹ CFU/mL.

6. The bionematicidal and plant growth stimulator biological preparation according to claim 4, **characterized in that** the final total concentration of living cells of said three bacteria is greater than 10⁹ CFU x mL-1 in a liquid formulation.

7. The bionematicidal and plant growth stimulator biological preparation according to claim 4, **characterized in that** the final total concentration of living cells of said three bacteria is greater than 10¹⁰ CFU x mL-1 in a solid formulation.

8. The bionematicidal and plant growth stimulator biological preparation according to any one of claims 4 to 7, **characterized by** containing in addition to the viable cells, organic matter and other substances with pesticidal activity and plant growth regulating substances.

9. The bionematicidal and plant growth stimulator biological preparation according to claim 4, **characterized in that** it is stabilized by means of a spray drying process using cell viability protecting substances selected from skimmed milk powder, maltodextrin and sucrose.

10. The bionematicidal and plant growth stimulator biological preparation according to claim 9, **characterized in that** the concentrations of the protecting substances are: skimmed milk powder between 1-3%, maltodextrin 3-5% and sucrose 2-4%.

11. The bionematicidal and plant growth stimulator biological preparation according to claim 4, for use in drip irrigation and flood irrigation.

## Patentansprüche

1. Reinkultur des mit N₁₁ bezeichneten Stammes der Art *Bacillus thuringiensis,* **dadurch gekennzeichnet, dass** sie eine hohe nematizide Aktivität, sowie Kollagenase-Aktivität aufweist, kein □-Exotoxin erzeugt und die Fähigkeit aufweist, Phosphate löslich zu machen, welche in der Spanischen Sammlung von Standardkulturen (CECT) mit Nummer CECT-7665 hinterlegt ist.

2. Reinkultur des mit SR₁₁ bezeichneten Stammes der Art *Bacillus mojavensis,* **gekennzeichnet durch** ihre Fähigkeit, Phosphate im Boden löslich zu machen und das Pflanzenwachstum zu stimulieren, wobei sie die Fähigkeit aufweist, Indol-3-essigsäure zu erzeugen und in 1-Aminocyclopropan-1-carbonsäure (ACC) als einzige Stickstoffquelle zu wachsen, wobei der genannte Stamm in der CECT mit Nummer CECT-7666 hinterlegt ist.

3. Reinkultur des mit ALo₁ bezeichneten Stammes der Art *Azospirillum brasilense,* **dadurch gekennzeichnet, dass** sie Indol-3-essigsäure, mit einem Umsetzungsprozent zwischen 70 - 90% des dem Kulturmedium zugegebenen Tryptophan, Siderophore und andere das Pflanzenwachstum regulierende Stoffe erzeugt, und atmosphärischen Stickstoff fixiert mit der Fähigkeit, in 1-Aminocyclopropan-1-carbonsäure (ACC) als einzige Stickstoffquelle zu wachsen, welche in der Spanischen Sammlung von Standardkulturen (CECT) mit Nummer CECT-5856 hinterlegt ist.

4. Bionematizide und das Pflanzenwachstum stimulierende biologische Zubereitung, **dadurch gekennzeichnet, dass** sie Stamm N₁₁ von *Bacillus thuringiensis* (CECT-7665), Stamm SR₁₁ von *Bacillus mojavensis* (CECT-7666) und Stamm ALo₁ von *Azospirillum brasilense* (CECT-5856) enthält.

5. Verfahren zur Zubereitung der bionematiziden und das Pflanzenwachstum stimulierende biologische Zubereitung nach Anspruch 4, **dadurch gekennzeichnet, dass** die Zellkonzentration größer als 10⁹ KBE/ml ist.

6. Bionematizide und das Pflanzenwachstum stimulierende biologische Zubereitung nach Anspruch 4, **dadurch gekennzeichnet, dass** die gesamte Endkonzentration von lebenden Zellen der genannten drei Bakterien in einer flüssigen Formulierung größer als 10⁹ KBE x ml⁻¹ ist.

7. Bionematizide und das Pflanzenwachstum stimulierende biologische Zubereitung nach Anspruch 4, **dadurch gekennzeichnet, dass** die gesamte Endkonzentration von lebenden Zellen der genannten drei Bakterien in einer festen Formulierung größer als 10¹⁰ KBE x ml⁻¹ ist.

8. Bionematizide und das Pflanzenwachstum stimulierende biologische Zubereitung nach einem der Ansprüche 4 bis 7, **dadurch gekennzeichnet, dass** sie zusätzlich zu den lebensfähigen Zellen, organisches Material und andere Stoffe mit Schädlingsbekämpfungsaktivität und das Pflanzenwachstum regulierende Stoffe enthält.

9. Bionematizide und das Pflanzenwachstum stimulierende biologische Zubereitung nach Anspruch 4, **dadurch gekennzeichnet, dass** es mittels eines Sprühtrocknungsverfahrens stabilisiert wird, unter Verwendung von Stoffen, welche die Lebensfähigkeit der Zellen schützen, ausgewählt aus Magermilchpulver, Maltodextrin und Sukrose.

10. Bionematizide und das Pflanzenwachstum stimulierende biologische Zubereitung nach Anspruch 9, **dadurch gekennzeichnet, dass** die Konzentrationen der Schutzstoffe Folgende sind: Magermilchpulver zwischen 1-3%, Maltodextrin 3-5% und Sukrose 2-4%.

11. Bionematizide und das Pflanzenwachstum stimulierende biologische Zubereitung nach Anspruch 4, für deren Verwendung in Tröpfchenbewässerung und Rieselbewässerung.

## Revendications

1. Culture pure de la souche dite N₁₁ de l'espèce *Bacillus thuringiensis,* **caractérisée en ce qu'**elle a une activité nématicide élevée, ainsi qu'une activité collagénase, ne produisant pas de β-exotoxine et ayant la capacité de solubiliser des phosphates, déposé dans la Collection Espagnole de Cultures Type (CECT) sous le numéro CECT-7665.

2. Culture pure de la souche dite SR₁₁ de l'espèce *Bacillus mojavensis,* **caractérisée par** sa capacité de solubiliser des phosphates du sol et stimuler la croissance des plantes, étant capable de produire de l'acide indole-3-acétique et être cultivée dans de l'acide 1-aminocyclopropane-1-carboxylique (ACC) comme seule source d'azote, ladite souche ayant été déposée dans la CECT sous le numéro CECT-7666.

3. Culture pure de la souche dite AL_{O1} de l'espèce *Azospirillum brasilense,* **caractérisée par** la production d'acide indole-3-acétique avec un pourcentage de conversion d'entre 70-90% du tryptophane ajouté dans le milieu de culture, des sidérophores et d'autres substances de régulation de la croissance des plantes, ainsi que la fixation d'azote atmosphérique avec capacité de croissance dans de l'acide 1-aminocyclopropane-1-carboxylique (ACC) comme seule source d'azote, déposée dans la Collection Espagnole de Cultures Type (CECT) sous le numéro CECT-5856.

4. Préparation biologique bionématicide et de stimulation de la croissance des plantes, **caractérisée en ce qu'**elle contient la souche N₁₁ de *Bacillus thuringiensis* (CECT-7665), la souche SR₁₁ de *Bacillus mojavensis* (CECT-7666) et la souche ALo₁ de *Azospirillum brasilense* (CECT-5856).

5. Procédé de préparation de la préparation biologique bionématicide et de stimulation de la croissance des plantes selon la revendication 4, **caractérisé en ce que** la concentration cellulaire est supérieure à 10⁹ UFC/ml.

6. Préparation biologique bionématicide et de stimulation de la croissance des plantes selon la revendication 4, **caractérisée en ce que** la concentration totale finale de cellules vivantes desdites trois bactéries est supérieure à 10⁹ UFC x ml-1 dans une formulation liquide.

7. Préparation biologique bionématicide et de stimulation de la croissance des plantes selon la revendication 4, **caractérisée en ce que** la concentration totale finale de cellules vivantes desdites trois bactéries est supérieure à 10¹⁰ UFC x ml-1 dans une formulation solide.

8. Préparation biologique bionématicide et de stimulation de la croissance des plantes selon l'une quelconque des revendications 4 à 7, **caractérisée en ce qu'**elle contient outre les cellules viables, de la matière organique et d'autres substances avec de l'activité pesticide et des substances de régulation de la croissance des plantes.

9. Préparation biologique bionématicide et de stimulation de la croissance des plantes selon la revendication 4, **caractérisée en ce qu'**elle est stabilisée au moyen d'un procédé de séchage par pulvérisation qui utilise des substances de protection de la viabilité cellulaire choisies parmi du lait écrémé en poudre, de la maltodextrine et du sucrose.

10. Préparation biologique bionématicide et de stimulation de la croissance des plantes selon la revendication 9, **caractérisée en ce que** les concentrations des substances de protection sont: 1-3% de lait écrémé en poudre, 3-5% de maltodextrine et 2-4% de sucrose.

11. Préparation biologique bionématicide et de stimulation de la croissance des plantes selon la revendication 4, pour son utilisation dans l'irrigation goutte-à-goutte et l'irrigation par ruissellement.
